Europäisches Patentamt

(19) European Patent Office

Office européen des brevets

(11) Numéro de publication: **0 269 707**
**B1**

(12) **FASCICULE DE BREVET EUROPEEN**

(45) Date de publication du fascicule du brevet: **17.10.90**

(51) Int. Cl.⁵: **B 05 B 1/32, F 02 M 19/02,
F 02 M 61/04, G 05 D 7/01**

(21) Numéro de dépôt: **87903882.6**

(22) Date de dépôt: **12.06.87**

(86) Numéro de dépót international:
**PCT/FR87/00215**

(87) Numéro de publication internationale:
**WO 87/07853 30.12.87 Gazette 87/29**

(54) **GICLEUR ET DISPOSITIF METTANT EN UVRE UN TEL GICLEUR.**

(30) Priorité: **17.06.86 FR 8608718**

(43) Date de publication de la demande:
**08.06.88 Bulletin 88/23**

(45) Mention de la délivrance du brevet:
**17.10.90 Bulletin 90/42**

(84) Etats contractants désignés:
**DE GB IT**

(56) Documents cités:
**FR-A-2 418 674
US-A-3 566 902
US-A-3 750 710**

(73) Titulaire: **LUCAS AIR EQUIPEMENT
270, avenue des Grésillons
F-92601 Asnières (FR)**

(72) Inventeur: **JUBERT, Xavier
25, rue Silly
F-92000 Boulogne (FR)**
Inventeur: **BONNIN, Jean-François
16, rue des Grands Prés
F-91430 Vauhallan (FR)**

(74) Mandataire: **Martin, Jean-Jacques et al
Cabinet REGIMBEAU 26, Avenue Kléber
F-75116 Paris (FR)**

Courier Press, Leamington Spa, England.

**Description**

L'invention concerne un gicleur, c'est-à-dire une pièce destinée à être placée dans un système hydraulique ou pneumatique, et possédant un orifice calibré pour limiter ou réguler le débit du fluide circulant dans ledit système. Elle concerne également un dispositif mettant en oeuvre un tel gicleur.

Le Brevet US 3 750 710 décrit un orifice pour fluide comportant des lames élastiques. La différence de pression sur les deux faces du dispositif assure la flexion des lames augmentant la surface de l'orifice.

On trouve des gicleurs dans les dispositifs d'injection de carburant des moteurs, ou dans des vérins, ou des valves, ou bien encore dans certains dispositifs d'amortissement des vibrations subies ou produites par des organes ou systèmes quelconques.

Cependant, les gicleurs utilisés pour ces différentes applications présentent l'inconvénient de posséder un débit proportionnel à la racine carrée du différentiel de pression existant entre l'entrée et la sortie de l'orifice calibré. Plus précisément, le débit est proportionnel au produit de la racine carrée du différentiel de pression par la surface de l'orifice. Cette particularité peut être gênante dans certains cas, tout particulèrement lorsqu'on veut obtenir un débit déterminé à la sortie du gicleur en l'utilisant dans une boucle de régulation du débit. En effet, dans de cas pécis, si on désire doubler le débit par rapport à une veleur donnée, il faut multiplier le différentiel de pression correspondant à ladite valeur par quatre. Ceci signifie par exemple que, si l'orifice de sortie du gicleur est dans une zone à pression constante, il faut faire varier la pression d'entrée pour faire varier le débit, et que si la pression de sortie est petite par rapport à la pression d'entrée, il faut quasiment multiplier par un facteur quatre la pression d'entrée pour doubler le débit de sortie.

Dans un tel cas, la pression nécessaire à l'entrée de l'injecteur varie de façon quasi exponentielle, et lorsque les valeurs deviennent élevées, il faut de fortes variations de la pression d'entrée pour obtenir des variations sensibles du débit. Or, la pression d'entrée est fournie par des moyens placés en amont dans le circuit hydraulique ou pneumatique, et il en résulte que l'énergie nécessaire à l'actionnement de ces moyens varie également de façon quasi exponentielle. Etant donné que le rendement desdits moyens n'est pas parfait, et n'est pas constant sur toute la plage d'utilisation, l'écart relatif entre l'énergie qui leur est fournie et l'énergie qu'ils produisent est d'autant plus important que les valeurs du débit et/ou de la puissance d'entrée sont éloignées de la valeur nominale qui peut être fournie par lesdits moyens.

Le gicleur de l'invention ne présente pas ces inconvénients.

Selon l'invention, un gicleur est caractérisé en ce qu'il comporte des moyens pour que les dimensions de l'orifice de passage du fluide varient en fonction du différentiel de pression existant entre son entrée et sa sortie.

Selon une autre caratéristique, le gicleur comporte un partie plate au travers de laquelle sont réalisées au moins deux découpes déterminant au moins un languette, destinée à être placée dans le trjet du fluide et susceptible de fléchir élastiquement lorsqu'il existe un différentiel de pression entre ses deux faces.

Selon une autre caractérisque, lorsqu'aucun différentiel de pression n'existe de part et d'autre de la languette, son plan principal et le plan de la partie plate dans laquelle elle est réalisée sont confondus, et lorsqu'un différentiel de pression existe, la languette effectue une flexion en direction de la zone où existe la basse pression.

De ce fait, lorsque la ou les languettes sont en position de repos, l'orifice de passage du fluide est minimum, sa surface correspondant alors à la surface totale des découpes réalisées dans la partie plate. Lorsque le différentiel de pression augmente, la ou les languettes fléchissent et la section de passage du fluide augmente alors; le débit est donc supérieur à celui qui aurait existé si la section n'avait pas varié.

Dans un mode de réalisation du gicleur, les découpes sont réalisées d'une façon telle qu'un partie au moins de la courbe du débit en fonction du différentiel de pression soit linéaire, le débit dans cette partie étant directement proportionnel au différentiel de pression existant entre l'entrée et la sortie.

L'invention a principalement pour objet un gicleur comportant une partie plate au travers de laquelle sont réalisées au moins deux découpes déterminant au moins une languette destinée à être placée dans le trajet du fluide et susceptible de fléchir élastiquement, augmentant de ce fait la section de passage du fluide, lorsqu'il existe un différentiel de pression entre ses deux faces est caractérisé en ce que chaque découpe est constituée de deux rainures parallèles entre elles, une sur chacune des faces de la partie plate, et d'une fente du même longueur que les rainures aboutissant dans le milieu de chaque paroi formant le fond d'une rainure.

D'autres caractéristiques et avantages de l'invention apparaîtront avec la description de quelques modes de réalisation faite en regard des figures annexées sur lesquelles:

la figure 1 montre la courbe du débit en fonction du différentiel de pression d'un gicleur de l'art antérieur;

les figures 2a et 2b représentent deux vues d'un gicleur de l'art antérieur;

les figures 3a, 3b, 4, 5a, 5b montrent des vues de divers modes de réalisation de gicleurs conformes à l'invention;

les figures 6a, 6b montrent deux vues d'un mode de réalisation préfére d'un gicleur conforme à l'invention;

la figure 7 est la courbe débit-différentiel de pression du gicleur de la figure 6;

les figures 8 et 9 se rapportent à un mode de réalisation d'un dispositif comportant au moins un gicleur conforme à l'invention.

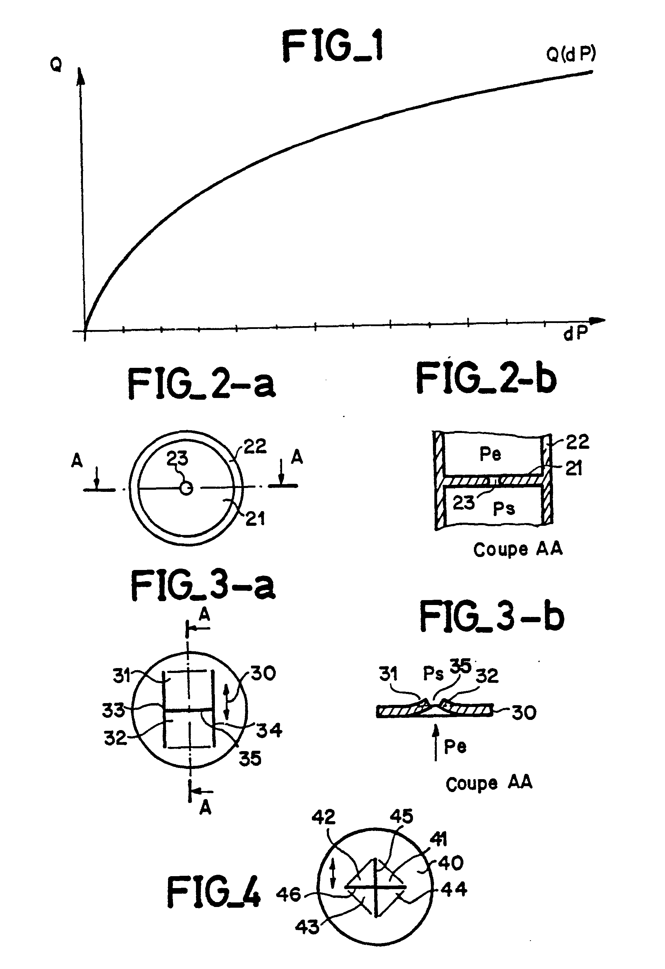

La figure 1 montre la courbe Q(dp) du débit Q d'un gicleur de l'art antérieur en fonction du différentiel de pression dp existant entre son entrée et sa sortie.

Dans un tel gicleur, l'expression du débit Q est de la forme $Q = k.S. \sqrt{dp}$ où k est un coefficient qui est notamment lié à la nature du fluide circulant dans le système et S est la section de l'orifice du gicleur. On constate que la pente de la courbe diminue au fur et à mesure que l'on s'éloigne de l'origine, c'est-à-dire lorsque le différentiel de pression augmente. Ceci signifie que si on veut utiliser un tel gicleur en régulateur de débit, il est de plus en plus difficile de réguler le débit lorsque les différentiels de pression sont élevés entre l'entrée et la sortie.

Les figures 2a et 2b montrent deux vues d'un gicleur de l'art antérieur dont la courbe du débit Q en fonction du différentiel de pression dp existant entre l'entrée et la sortie est celle de la figure 1. La figure 2b est une vue en coupe AA de la figure 2a.

Le gicleur comporte par exemple une partie plate 21 placée dans le circuit du fluide circulant dans le système hydralique ou pneumatique. Cette partie de circuit est par exemple une tubulure 22.

La partie efficace du gicleur est un orifice 23, ménagé au travers de la partie plate 21 placée dans la tubulure. Le débit dépend de la section de cet orifice et est donc proportionnel à la racine carrée du différentiel de pression (Pe—Ps) existant entre l'entrée et la sortie du gicleur.

Les figures 3a et 3b montrent un mode de réalisation d'un gicleur conforme à l'invention qui permet de remédier aux problèmes posés par les gicleurs de l'art antérieur. La figure 3b est une vue en coupe AA de la figure 3a, lorsqu'une circulation de fluide est établie.

Le gicleur est constitué essentiellement d'une partie plate 30 munie de deux languettes 31, 32 déformables par élasticité lorsqu'une pression est exercée sur l'une de leurs faces. Ces deux languettes sont obtenues en réalisant trois découpes 33, 34, 35 dans la partie plate. Deux des découpes 33, 34 sont parallèles entre elles et la troisième 35 leur est perpendiculaire et joint leurs milieux. Ainsi, en vue de dessus, (figure 3a) les découpes ont la forme d'un H et les deux languettes 31, 32 se trouvent en vis-à-vis l'une de l'autre.

Lorsque la différence entre la pression d'entrée Pe et la pression de sortie Ps du gicleur devient suffisante pour vaincre la résistance élastique des languettes, celles-ci fléchissent et l'orifice qui, au départ, possédait la section de la découpe, augmente de section. Ainsi, pour un différentiel de pression donné, le débit est supérieur à celui qui aurait existé si la section de l'orifice était restée constante.

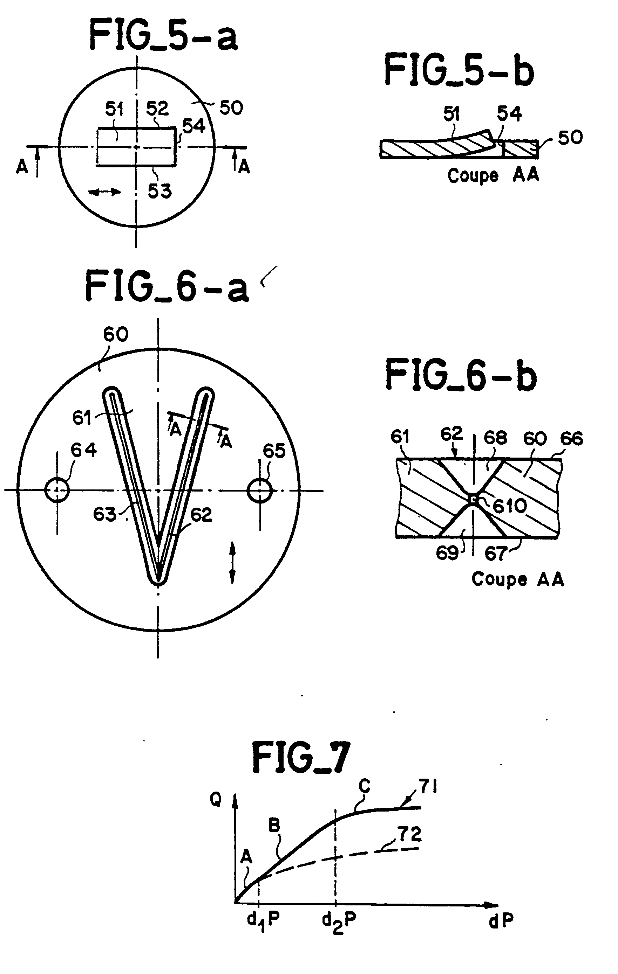

La figure 4 montre une variante de réalisation dans laquelle on prévoit de réaliser également sur une partie plate 40 quatre languettes 41, 42, 43, 44, de forme triangulaire. Ces languettes sont obtenues par exemple en réalisant deux découpes 45, 46 se croisant en leur milieu.

De préférence, comme le montre la figure 4, les découpes 45, 46 sont de longueur égale et perpendiculaires entre elles. Ainsi, dans ce cas, les quatres languettes ont les mêmes formes et surfaces. Cependant, on peut augmenter le nombre de languettes en augmentant le nombre de découpes et en les croisant de préférence avec des angles égaux.

Comme dans le cas précédent, lorsque le différentiel de pression devient supérieur au seuil inférieur de flexion des languettes, la section de passage du fluide augmente.

Les figures 5a et 5b montrent deux vues d'une autre variante, la figure 5b étant une vue en coupe AA de la figure 5a, lorsqu'il existe un différentiel de pression.

La languette 51 de forme rectangulaire a été réalisée dans une partie plate 50 également, en y effectuant trois découpes 52, 53, 54, dont deux sont parallèles entre elles et dont la troisième joint une extrémité de chacune des deux premières.

Comme le montre la figure 5b, la languette 51 fléchit également lorsque le différentiel de pression devient suffisant pour vaincre son seuil inférieur de flexion, et la section de l'orifice de passage du fluid augment alors au fur et à mesure que le différentiel de pression augmente en delà de ce seuil.

Les divers modes de réalisation qui viennent d'être décrits permettent d'obtenir, pour un différentiel de pression supérieur au seuil inférieur de fléchissement des languettes, un débit supérieur à celui qui aurait été obtenu si l'orifice de passage du fluide était resté de section constante. De ce fait, l'énergie nécessaire pour augmenter le débit d'une valeur déterminée dans ces types de gicleurs est moins importante que celle nécessaire dans les gicleurs de l'art antérieur et les gicleurs conformes à l'invention sont donc plus souples d'emploi que ceux de l'art antérieur.

Les figures 6a et 6b montrent deux vues distinctes du mode de réalisation préféré d'un gicleur conforme à l'invention, la figure 6b étant une vue en coupe AA de la figure 6a, qui peut également s'appliquer aux découpes décrites sur les figures précédentes.

Ce gicleur comporte également une partie plate 60 dans laquelle est réalisée une seule languette 61 de forme triangulaire. Pour celà, deux découpes 62, 63 formant un angle aigu entre elles et ayant une extrémité commune sont effectuées dans la partie plate 60.

Afin de fixer le gicleur aux éléments qui l'environnent, au moins deux trous 63, 64 sont prévus à proximité des bords de la partie plate 60, pour permettre le passage de vis ou de pièces ayant la même fonction. D'autres moyens de fixation peuvent être envisagés.

Des trous semblables, ou des moyens équivalents, non pas été représentés sur les figures 3a, 4, 5a montrant les autres modes de réalisation. Cependant, il est clair qu'ils y sont également nécessairement présents.

Les découpes 62, 63 sont droites comme le montre la figure 6a et ont, dans l'épaisseur de la partie plate, de préférence la forme représentée sur la figure 6b.

Chaque découpe relie les deux faces principales 66, 67 parallèles entre elles de la partie plate 60, et est constitué de deux rainures 68, 69, une sur chaque face, reliées par une fente 610.

De préférence, les axes longitudinaux des rainures 68, 69 sont parallèles entre eux. De préférence, lesdits axes sont portés sur un même plan perpendiculaire aux deux faces 66, 67, et l'axe longitudinal de la fente 610 qui relie les deux rainures leur est parallèle.

Dans un mode de réalisation préfére, les rainures 68, 69 ont la forme d'un fraisage, comme le montre la figure 6b. Pour celà chaque rainure 68, 69 comporte trois parois distinctes, deux d'entre elles formant ses côtés, symétriques par rapport à un plan perpendiculaire aux axes, et la troisième formant son fond.

Entre les parois formant les côtés de la rainure existe un angle aigu déterminé, de préférence supérieur et/ou égal à 45°. La paroi formant le fond est arrondie, et la fente 610 reliant deux rainures 68, 69 aboutit dans le milieu de cette paroi formant le fond. Ainsi, cette paroi formant le fond est constituée de deux demi-parois arrondies séparées par la fente 610 de jonction. Le fente possède la même longueur que les rainures.

Il est clair que les fentes et rainures particulières qui viennent d'être décrites pour le gicleur avec une languette triangulaire peuvent être réalisées sur les types de gicleurs antérieurement décrits dans le cadre de cette invention.

Le mode de réalisation avec une languette triangulaire, ménagée entre deux découpes constituées chacune de deux rainures en forme de fraisage reliées par un fente, présente des avantages supplémentaires par rapport aux autres modes de réalisation ultérieurement décrits: en effet il permet d'obtenir une courbe du débit en fonction du différentiel de pression linéaire dans au moins une partie de son domaine d'utilisation.

Cette courbe est représentée sur la figure 7, sous la référence 71, en trait plein. Une autre courbe 72 est représentée en trait interrompu: il s'agit de la courbe caractéristique des gicleurs de l'art antérieur.

La courbe 71 du mode de réalisation préféré du gicleur de l'invention a été représentée en trois parties A, B, C, ayant chacune une courbure différente.

La partie A, en début de courbe, comprise entre l'origine et un différentiel de pression d1p correspond à l'intervalle pendant lequel la languette 61 n'effectue aucune flexion car les valeurs du différentiel de pression n'atteignent pas le seuil inférieur de flexion de la languette. Pour cette partie A, la courbe a l'allure de celle d'un gicleur de l'art antérieur, puisque la section de l'orifice reste constante.

Ainsi, si un gicleur de l'art antérieur qui donne la courbe 72 possède un orifice dont la section constante est égale à la section de l'orifice du gicleur conforme à l'invention avant que la languette ait commencé à fléchir, on constate que la partie A de la courbe 71 du gicleur de l'invention est confondue avec le début de la courbe 72. La partie B de la courbe 71, comprise entre les valeurs des différentiels de pression d1p et d2p est la partie linéaire. Dans cette partie de courbe, une variation de débit Q est directement proportionnelle à une variation du différentiel de pression. Cette caractéristique est particulièrement intéressante puisqu'il est possible d'utiliser un tel gicleur dans une boucle de régulation de débit, d'une façon très simple, en le faisant fonctionner dans cette partie linéaire, car dans ce cas les dispositifs d'asservissement ou de commande associés sont plus aisés à metre en oeuvre.

La partie C de la courbe 71 est celle que l'on peut observer à partir du moment où la languette 61 a atteint sa flexion maximum. Dans ce cas, l'orifice de passage du fluide devient constant, et le débit redevient proportionnel à la racine carrée du différentiel de pression. Dans le cas de figure représenté, la languette atteint sa flexion maximum pour le différentiel de pression d2p.

Il est bien entendu que la courbe du débit Q en fonction du différentiel de pression dp existant entre l'entrée et la sortie du gicleur dépend essentiellement d'une part du matériau employé pour sa constitution, et d'autre part de la section initiale de l'orifice, c'est-à-dire la section des découpes.

En effet, la flexion débute d'autant plus rapidement que la section initiale est petite et que l'élasticité de la languette est grande. En intervenant sur ces paramètres, la partie A de la courbe 71 peut être réduite ou, au contraire, accentuée, selon l'utilisation envisagée pour le gicleur.

De préférence, un gicleur possédant une languette 61 triangulaire est constitué d'une pièce 60 plate, circulaire, en acier.

Dans ce mode de réalisation, le diamètre de la pièce plate 60 est de 16 mm, et son épaisseur de l'ordre du millimètre. Les deux découpes font un angle de l'ordre de 30° entre elles, et ont une longueur de 10 mm environ. Entre les parois formant les côtés de chaque rainure 68, 69 existe un angle de 90° environ et le rayon de courbure de le paroi formant le fond est d'environ 0,15 mm. La fente 610 reliant les fonds des deux rainures formant une découpe est large de 0,1 mm et longue de 10 mm, alors que la profondeur totale d'une rainure, prise entre une face 66, 67 de la partie plate, et l'intersection d'une rainure avec la fente 610 est de 0,45 mm environ.

De préférence, les gicleurs sont en acier et l'usinage des rainures et des fentes est réalisé en électroérosion par fil dans chacun des types de gicleurs conformes à l'invention. De plus, un traitement de rectification des faces est effectué après la réalisastion des rainures et des fentes.

Sur les figures 3a, 4, 5a, 6a on a représenté une double flèche qui indique, le cas échéant, le sens principal des fibres du matériau constitutif des gicleurs. On constate ainsi que l'axe de flexion des languettes, représenté sur certaines figures par un trait fin reliant les extrémités libres de deux découpes, fait toujours un angle au moins égal à 45° avec le sens principal des fibres, d'une part pour que l'élasticité des languettes soit suffisante, et d'autre part pour éviter les risques de cassure le long des fibres.

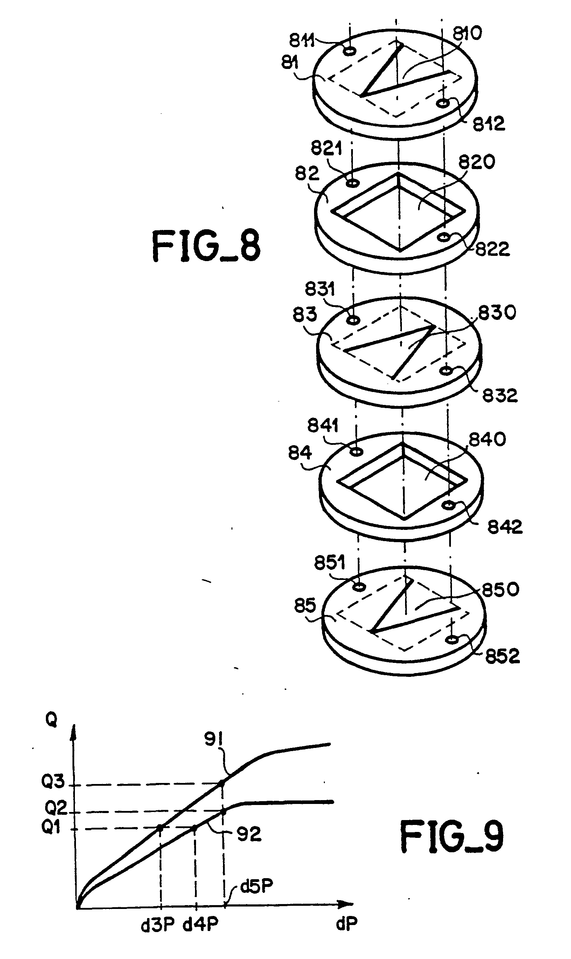

Les figures 8 et 9 ont trait à un mode de réalisation d'un dispositif comportant au moins deux gicleurs conformes à l'invention. L'association d'au moins deux gicleurs semblables permet d'obtenir une courbe résultante différente, et donc des caractéristiques différentes.

La figure 8 représente une vue éclatée d'un dispositif comportant trois gicleurs réalisés selon le mode préférentiel de l'invention.

Ils comportent chacun une partie plate 81, 83, 85 et une languette 810, 830, 850. Afin de permettre la flexion des languettes, on prévoit des pièces intercalaires pour séparer deux languettes voisines. Chaque pièce intercalaire est constituée d'une partie plate 82, 84 percée d'une fenêtre 820, 840 qui autorise le passage d'une languette lorsqu'elle fléchit. En l'absence de telles pièces intercalaires, deux gicleurs voisins seraient accolés par leurs faces et la flexion des languettes ne pourrant avoir lieu.

En outre, au moins deux trous 811, 812; 821, 822; ... 851, 852 sont prévus dans chaque gicleur et chaque pièce intercalaire pour permettre la fixation de ces divers éléments entre eux et au système pneumatique ou hydraulique associé, à l'aide de moyens appropriés non représentés sur la figure.

Ces moyens peuvent être des vis, des goujons ou toutes autres pièces équivalentes assurant la même fonction.

De préférence, comme le montre la figure 8, lorsque le dispositif comporte au moins deux gicleurs identiques, ceux-ci sont placés parallèlement les uns aux autres, mais les languettes ne sont pas orientées de la même façon. Dans le mode de réalisation de la figure 8, deux languettes voisines sont décalées de 180° l'une par rapport à l'autre. Cette disposition permet une répartition optimale des efforts sur la structure lors du fontionnement.

Les fenêtres réalisées dans les intercalaires possèdent au moins un côté de forme droite destiné à être mis en place de façon que sa projection perpendiculaire sur le plan du gicleur associé passe par les extrémités libres des fentes. De ce fait, lorsqu'un gicleur est fixé entre deux intercalaires, le côté ayant une forme droite de la fenête de chacun de ces deux intercalaires est en regard de l'axe de flexion, et le mouvement de la languette est parfaitement contrôlé.

Afin de permettre un décalage angulaire entre deux languettes voisines, séparées par un intercalaire, il faut que la fenêtre du dit intercalaire ait au moins deux côtés de forme droite, et pour permettre un décalage à 180°, il faut que ces deux côtés soient opposés et parallèles entre eux.

Sur la figure 8, les fenêtres représentées sont carrées, et les projections de leurs côtés sur les gicleurs sont portés en traits interrompus. On a décalé les gicleurs de 180°, mais la forme carrée permettrait un décalage de 90° entre deux gicleurs.

Dans une variante, non représentée, les fenêtres sont rectangulaires, ce qui suffit pour réaliser des décalages de 180° en utilisant le petit côté du rectangle comme support de l'axe de flexion.

L'emploi d'au moins deux gicleurs identiques permet d'augmenter le différentiel de pression tout en obtenant un même débit, ou bien de diminuer le débit en ayant un même différentiel de pression, qu'avec un seul gicleur.

La figure 9 montre une première courbe 91 du débit Q, en fonction du différentiel de pression dp, d'un gicleur selon le mode préféré de réalisation, en regard d'une seconde courbe 92 du débit Q d'un dispositif constitué par l'association d'au moins deux gicleurs selon le mode préféré de réalisation, et ayant chacun des caractéristiques identiques ou proches de celui qui donne la première courbe 91.

On constate à l'aide de ces courbes qu'un seul gicleur donne un débit Q1 pour un différentiel de pression d3p, alors qu'un dispositif constitué d'au moins deux gicleurs identiques donne le même débit Q1 pour un différentiel de pression d4p, supérieur au différentiel de pression d3p.

En outre, on constate qu'un même différentiel de pression d5p correspond à un débit Q2 dispositif inférieur à un débit Q3 d'un seul gicleur.

L'association d'au moins deux gicleurs identiques permet donc d'obtenir un dispositif aux caractéristiques pré-établies, de façon très souple et aisée.

On peut également associer des gicleurs différents, connaissant la courbe de chacun, pour obtenir une résultante déterminée.

L'invention est donc particulièrement avantageuse puisqu'elle permet de réaliser des dispositifs ayant une fonction de transfert facilement calculable.

**Revendications**

1. Gicleur comportant une partie plate (30, 40, 50, 60) au travers de laquelle sont réalisées au moins deux découpes (33, 45, 52, 62, 63) déterminant au moins une languette (31, 41, 51, 61) destinée à être placée dans le trajet d'un fluide et susceptible de fléchir élastiquement, augmentant de ce fait la section de passage du fluide, lorsqu'il existe une différence de pression entre ses deux faces, caractérisé en ce que chaque découpe (62, 63) est constitutée de deux rainures (68, 69) parallèles entre elles, une sur chacune des faces de la partie plate, et d'une fente (610) de même longueur que les rainures aboutissant dans le millieu de chaque paroi formant le fond d'une rainure (68, 69).

2. Gicleur selon la revendication 1, caractérisé en ce que chaque rainure (68, 69) possède deux parois plates formant deux côtés et une troisième, arrondie formant le fond.

3. Gicleur selon la revendication 2, caractérisé en ce qu'entre les parois plates formant les côtés d'une rainure (68, 69) existe un angle de 45° au moins.

4. Gicleur selon la revendication 3, caractérisé en ce qu'entre les parois plates formant les côtés d'une rainure (68, 69) existe un angle de 90° environ.

5. Gicleur selon la revendication 3, caractérisé en ce que la profondeur des rainures (68, 69), jusqu'à l'intersection avec la fente (610) est de 0,45 mm environ.

6. Gicleur selon la revendication 5, caractérisé en ce que la largeur de la fente (610) est de 0,1 mm environ.

7. Gicleur selon l'une quelconque des revendications précédentes, caractérisé en ce qu'il est réalisé dans un matériaus fibreux.

8. Gicleur selon la revendication 1, caractérisé en ce qu'entre l'axe de flexion d'une languette et le sens des fibres du matériau existe un angle au moins égal à 45°.

9. Gicleur selon l'une quelconque des revendications 1 à 6 précédentes, caractérisé en ce qu'il est en acier.

10. Gicleur selon l'une quelconque des revendications précédentes, caractérisé en ce qu'il comporte des moyens de fixation aux éléments qui l'environnent.

11. Gicleur selon la revendication 10, caractérisé en ce que les moyens comprennent aux moins deux trous (64, 65) permettant le passage de vis et/ou de goujons.

12. Dispositif pour limiter ou réguler le débit d'un fluide circulant dans ce système, caractérisé en ce qu'il comporte au moins deux gicleurs selon l'une quelconque des revendications 1 à 11, placés l'un à proximité de l'autre.

13. Dispositif selon la revendication 12, caractérisé en ce qu'il comporte au moins deux gicleurs identiques selon l'une quelconque des revendications 1 à 11.

14. Dispositif selon l'une des revendications 12 ou 13, caractérisé en ce qu'il comporte, entre deux gicleurs, une pièce intercalaire constituée d'une partie plate percée d'une fenêtre pour permettre à un gicleur de fonctionner correctement, et comportant des moyens de fixation aux deux gicleurs qu'elle sépare.

15. Dispositif selon la revendication 14, caractérisé en ce qu'une fenêtre comporte au moins un côté de forme droite, destiné à être placé en regard de l'axe de flexion d'une languette.

16. Dispositif selon la revendication 15, caractérisé en ce qu'une fenêtre possède au moins deux côtés de forme droite, parallèles entre eux.

17. Dispositif selon la revendication 16, caractérisé en ce qu'une fenêtre possède la forme d'un quadrilatère tel qu'un carré ou un rectangle.

## Patentansprüche

1. Einspritzdüse mit einem platten Teil (30, 40, 50, 60), durch das quer wenigstens zwei Schnitte (33, 45, 52, 62, 63) ausgeführt sind, die wenigstens eine Zunge (31, 41, 51, 61) begrenzen, die dazu bestimmt ist, im Durchflußweg einer Flüssigkeit angeordnet zu sein und die Möglichkeit aufweist, elastisch nachzugeben, wodurch der Durchtrittsbereich für die Flüssigkeit vergrößert wird, wenn eine Druckdifferenz zwischen ihren beiden Seiten vorhanden ist, dadurch gekennzeichnet, daß jeder Schnitt (62, 63) aus zwei unter sich parallelen Nuten (68, 69) besteht, die jeweils auf einer der Seiten des platten Teils angeordnet sind, sowie aus einem Schlitz (610) mit der gleichen Länge wie die Nuten (68, 69), der an den mittleren Bereich jeder Wand angrenzt, die den Boden einer Nut bildet.

2. Einspritzdüse nach Anspruch 1, dadurch gekennzeichnet, daß jede Nut (68, 69) zwei ebene Wände aufweist, die die beiden Seiten bilden und eine dritte, die abgerundet ist und den Boden bildet.

3. Einspritzdüse nach Anspruch 2, dadurch gekennzeichnet, daß zwischen den ebenen Wänden, die die Seiten einer Nut (68, 69) bilden, ein Winkel von wenigstens 45° besteht.

4. Einspritzdüse nach Anspruch 3, dadurch gekennzeichnet, daß zwischen den ebenen Wänden, die die Seiten einer Nut (68, 69) bilden, ein Winkel von ungefähr 90° besteht.

5. Einspritzdüse nach Anspruch 3, dadurch gekennzeichnet, daß die Tiefe der Nuten (68, 69) bis zum Schnittpunkt mit dem Schlitz (610) ungefähr 0,45 mm beträgt.

6. Einspritzdüse nach Anspruch 5, dadurch gekennzeichnet, daß die Breite des Schlitzes (610) ungefähr 0,1 mm beträgt.

7. Einspritzdüse nach einem der vorhergehenden Ansprüche, dadurch gekennzeichnet, daß sie aus einem faserhaltigen Werkstoff hergestellt ist.

8. Einspritzdüse nach Anspruch 7, dadurch gekennzeichnet, daß zwischen der Biegeachse einer Zunge und der Faserrichtung des Werkstoffs ein Winkel von wenigstens 45° besteht.

9. Einspritzdüse nach einem der vorhergehenden Ansprüche 1 bis 6, dadurch gekennzeichnet, daß sie aus Stahl besteht.

10. Einspritzdüse nach einem der vorhergehenden Ansprüche, dadurch gekennzeichnet, daß sie Mittel zur Befestigung an sie umgebende Elemente aufweist.

11. Einspritzdüse nach Anspruch 10, dadurch gekennzeichnet, daß die Mittel aus wenigstens zwei Löchern (64, 65) bestehen, die das Passieren von Schrauben und/oder Bolzen gestatten.

12. Vorrichtung zum Begrenzen oder Regeln der Menge einer in dem System zirkulierenden Flüssigkeit, dadurch gekennzeichnet, daß sie wenigstens zwei Einspritzdüsen gemäß einem der Ansprüche 1 bis 11 aufweist, wobei die eine in der Nähe der anderen angeordnet ist.

13. Vorrichtung nach Anspruch 12, dadurch gekennzeichnet, daß sie wenigstens zwei identische Einspritzdüsen gemäß einem der Ansprüche 1 bis 11 aufweist.

14. Vorrichtung nach einem der Ansprüche 12 oder 13, dadurch gekennzeichnet, daß sie zwischen zwei Einspritzdüsen ein Zwischenstück aufweist, das aus einem platten, von einem Fenster durchdrungenen Teil besteht, um für eine Einspritzdüse eine korrekte Funktion zu gewährleisten, und Mittel zur Befestigung an den beiden Einspritzdüsen aufweist, die es voneinander trennt.

15. Vorrichtung nach Anspruch 14, dadurch gekennzeichnet, daß ein Fenster wenigstens eine Seite mit geradliniger Form aufweist, die dazu bestimmt ist, auf die Biegeachse der Zunge ausgerichtet zu werden.

16. Vorrichtung nach Anspruch 15, dadurch gekennzeichnet, daß ein Fenster wenigstens zwei Seiten mit geradliniger Form aufweist, die zueinander parallel sind.

17. Vorrichtung nach Anspruch 16, dadurch gekennzeichnet, daß ein Fenster die Form eines Vierecks, beispielsweise eines Quadrats oder eines Rechtecks, aufweist.

## Claims

1. An orifice plate comprising a flat portion (30, 40, 50, 60) in which there are at least two cut-outs (33, 45, 52, 62, 63) forming at least one tongue (31, 41, 51, 61) designed to be placed in the path of a fluid and capable of bending elastically, thus increasing the cross-section for the passage of fluid when there is a pressure difference between its two sides, characterised in that each cut-out (62, 63) consists of two grooves (68, 69) which are parallel to each other, one on each side of the flat part, and a slot (610) of the same length as the grooves ending in the middle of each wall forming the base of a groove (68, 69).

2. An orifice plate according to claim 1, characterised in that each groove (68, 69) has two flat walls forming two sides and a third rounded wall forming the base.

3. An orifice plate according to claim 2, characterised in that there is an angle of at least 45° between the flat walls forming the sides of a groove (68, 69).

4. An orifice plate according to claim 3, characterised in that there is an angle of approximately 90° between the flat walls forming the sides of a groove (68, 69).

5. An orifice plate according to claim 3, characterised in that the depth of the grooves (68, 69) down to the intersection with the slot (610) is approximately 0.45 mm.

6. An orifice plate according to claim 5, characterised in that the width of the slot (610) is approximately 0.1 mm.

7. An orifice plate according to any one of the foregoing claims, characterised in that it is constructed of a fibrous material.

8. An orifice plate according to claim 7, characterised in that there is an angle of at least 45° between the axis of flexion of a tongue and the direction of the fibres in the material.

9. An orifice plate according to any one of claims 1 to 6 above, characterised in that it is constructed of steel.

10. An orifice plate according to any one of the foregoing claims, characterised in that it has means of attachment to the components surrounding it.

11. An orifice plate according to claim 10, characterised in that these means comprise at least two holes (64, 65) for the passage of screws and/or bolts.

12. Means for limiting or regulating the flow of a fluid circulating in this system, characterised in that it comprises at least two orifice plates according to any one of claims 1 to 11, placed close together.

13. Means according to claim 12, characterised in that it comprises at least two identical orifice plates according to any one of claims 1 to 11.

14. Means according to one of claims 12 to 13, characterised in that it incorporates an intercalary piece between the two orifice plates consisting of a flat portion pierced with a window to enable an orifice plate to operate correctly, and including means of attachment to the two orifice plates which it separates.

15. Means according to claim 14, characterised in that a window includes at least one straight side intended to be placed opposite the axis of flexion of a tongue.

16. Means according to claim 15, characterised in that a window has at least two straight sides which are parallel to each other.

17. Means according to claim 16, characterised in that a window has the shape of a quadrilateral such as a square or a rectangle.

FIG_1

FIG_2-a

FIG_2-b

Coupe AA

FIG_3-a

FIG_3-b

Coupe AA

FIG_4

# FIG_5-a

51 | 52
50
54
A ↕
A
53

# FIG_5-b

51    54
50
Coupe AA

# FIG_6-a

60
61
A
A
64
65
63
62

# FIG_6-b

61    62    68    60    66
610
69    67
Coupe AA

# FIG_7

Q
C
71
B
72
A
$d_1P$    $d_2P$    dP

FIG_8

FIG_9

3